# EUROPÄISCHE PATENTSCHRIFT

(11) **EP 2 376 801 B1**
(45) Veröffentlichungstag und Bekanntmachung des Hinweises auf die Patenterteilung: **28.10.2015**
(21) Anmeldenummer: 09744150.5
(22) Anmeldetag: 30.10.2009
(51) Int. Cl.: F16F 9/04, F16F 9/05

(54) **LUFTFEDER**
AIR SPRING
AMORTISSEUR PNEUMATIQUE

(30) Priorität: 11.12.2008 DE 102008055509
(43) Veröffentlichungstag der Anmeldung: 19.10.2011
(73) Patentinhaber: ContiTech Luftfedersysteme GmbH, 30165 Hannover (DE)
(72) Erfinder: BANK, Christoph, 31275 Lehrte (DE)
(74) Vertreter: Finger, Karsten
(86) Internationale Anmeldenummer: PCT/EP2009/064356
(87) Internationale Veröffentlichungsnummer: WO 2010/066508

(56) Entgegenhaltungen:
- EP-A2- 0 274 615
- EP-A2- 0 295 392
- WO-A1-00/73676
- WO-A1-01/61207
- WO-A1-2007/104671
- DE-A1-102006 033 197
- DE-A1-102006 050 020
- FR-A- 1 198 448
- US-A- 2 922 637

## Beschreibung

Die Erfindung betrifft eine Luftfeder für Nutzfahrzeuge mit einem ersten Anschlussteil, insbesondere in Form eines Deckels, einem zweiten Anschlussteil in Form eines Abrollkolbens, und einem Rollbalg aus elastomerem Werkstoff, wobei ein erstes Ende des Rollbalges mittels eines ersten Befestigungsmittels an dem ersten Anschlussteil und ein zweites Ende des Rollbalges mittels eines zweiten Befestigungsmittels an dem Abrollkolben dichtend befestigbar ist.

Derartige Luftfedern sind an sich bekannt und in großer Vielfalt in Nutzfahrzeugen, beispielsweise in Zugfahrzeugen und Anhängern, im Einsatz.

Der Rollbalg selbst besteht aus einem elastomeren Material, vorzugsweise aus Gummi oder einem gummiähnlichem Kunststoff, und weist häufig endseitige Befestigungswülste auf

Die Befestigung bzw. Einspannung des Rollbalges an den Anschlussteilen kann formschlüssig unter Verwendung von Klemmringen bzw. Spannringen oder durch einfaches Aufschieben der Befestigungswülste des Rollbalgs auf konusförmige Dichtflächen erfolgen. Die Befestigungswülste des Rollbalges sind üblicherweise mit eingebetteten zugfesten Wulstkernen bzw. Ringkörpern bzw. Piercekemen aus Stahl oder Stahldraht verstärkt und liegen unter der Wirkung des Innendruckes des Rollbalges an zugeordneten, konusförmigen Sitzflächen der Anschlussteile dichtend an.

Die Anbindung zwischen Rollbalg und Anschlussteilen kann auch über verschraubbare Spannteller hergestellt werden, die den Rollbalg auf dem jeweiligen Anschlussteil, insbesondere auf dem Abrollkolben fixieren. Bei dieser Befestigung wird das Innenvolumen des Abrollkolbens für die Schraubverbindung genutzt, so dass dieses dann nicht mehr für eine Minimierung der Eigenfrequenz zur Verfügung steht. Eine Luftfeder mit einer solchen Anbindung des Rollbalges an den Abrollkolben soll nicht Gegenstand der vorliegenden Erfindung sein.

Die Anbindung der Anschlussteile an den Rollbalg kann zudem durch eine Bördelplatte erfolgen, wobei eine derartige Bördelplatte üblicherweise um einen korrespondierenden Befestigungswulst des Rollbalges herum greift und so fest, luftdicht und unlösbar mit dem Rollbalg verbunden ist. Dadurch sind vorteilhaft große Zugkräfte übertragbar.

Weiter ist bekannt, die Anschlussteilen, also den Abrollkolben und/oder den Deckel bzw. die Abdeckplatte, aus Kunststoff auszubilden. Dadurch sind die Anschlussteile vor Korrosion geschützt und haben vorteilhaft gegenüber herkömmlichen Anschlussteilen aus Metall ein viel geringeres Gewicht. Nachteilig daran ist, dass sich gezeigt hat, dass solche Luftfedern bei Temperaturschwankungen häufig nicht dicht sind.

Ausgehend von diesem Stand der Technik liegt der Erfindung die Aufgabe zugrunde, eine gattungsgemäße Luftfeder, bei der das eine oder andere Anschlussteil aus Kunststoff besteht, derart weiterzuentwickeln, dass eine dichte Anbindung des Rollbalges am Anschlussteil auch bei Temperaturschwankungen sichergestellt ist.

Diese Aufgabe wird erfindungsgemäß durch die Merkmale des Anspruchs 1 gelöst.

Erfindungsgemäß ist vorgesehen, dass der Abrollkolben aus Kunststoff besteht und das zweite Befestigungsmittel nicht aus Metall ausgebildet ist und/oder dass das erste Anschlussteil aus Kunststoff besteht und das erste Befestigungsmittel nicht aus Metall ausgebildet ist.

Es hat sich gezeigt, dass dadurch eine luftdichte und feste Verbindung zwischen Rollbalg und Anschlussteil bei jeder zu erwartenden Einsatztemperatur der Luftfeder erreicht werden kann. Eine solche Verbindung ist wirkungsvoll und kostengünstig herstellbar.

Es hat sich gezeigt, dass bei einer Luftfeder mit einem Abrollkolben aus Kunststoff, an dem die Anbindung des Rollbalges über eine konusförmige Dichtfläche mittels wenigstens eines Befestigungsmittels aus Metall, üblicherweise mittels einer Gummi-Metallverbindung, erfolgt, die Dichtheit dieser so genannten Konussitz-Konstruktion nicht gewährleist ist.

Der Erfindung liegt die Erkenntnis zugrunde, dass die Undichtheit auf die um den Faktor 10 unterschiedlichen Längenausdehnungskoeffizienten zwischen Kunststoff und Stahl zurückzuführen ist.

Eine Weiterbildung der Erfindung sieht vor, dass der Rollbalg an seinem, dem Abrollkolben zugewandten Ende einen Befestigungswulst mit einem Wulstkern aufweist, wobei der Wulstkern aus Kunststoff besteht.

Der Weiterbildung liegt ebenfalls die Erkenntnis zugrunde, dass bei einem Rollbalg mit einem endseitigen Befestigungswulst und metallischen Wulstkernen zur Anbindung an den Abrollkolben der Innendruck in der Luftfeder zwar üblicherweise den Befestigungswulst in die konusförmige Dichtfläche bzw. in den Konussitz des Abrollkolbens drückt, jedoch bei Temperaturänderungen sich aufgrund der unterschiedlichen Längenausdehnungskoeffizienten von Kunststoff und Metall die Durchmesser des Konussitzes auf der aus Kunststoff bestehenden Kolbenseite und des aus Metall bestehenden Wulstkernes auf der Rollbalgseite so stark verändern, dass bei geringen Innendruck in der Luftfeder der Konussitz nicht mehr abdichtet.

Dadurch, dass der Wulstkern bzw. Piercekern aus Metall bzw. Stahl durch einen Wulstkern aus Kunststoff, vorzugsweise aus Polyamid, ersetzt wird, ergibt sich am Konussitz eine bevorzugte Materialpaarung aus einem Elastomer, nämlich des Rollbalges, und einem Kunststoff, nämlich des Abrollkolbens und des Wulstkernes, so dass sich der Abrollkolben und der Befestigungswulst der Rollbalges unter Temperatureinfluss im gleichen Maße ausdehnen. Die Dichtheit ist somit über den gesamten, beim Einsatz der Luftfeder zu erwartenden Temperaturbereich gegeben.

Zweckmäßigerweise bestehen der Abrollkolben und der Wulstkern aus einem Kunststoff mit gleichem oder ähnlichem Längenausdehnungskoeffizienten bestehen. Dadurch wird die Dichtheit der Luftfeder im besonderen Maße gewährleistet. Die Materialien für die Anschlussteile und für die Befestigungsmittel, insbesondere für die Wulstkerne, können optimal aufeinander abgestimmt werden.

Eine vorteilhafte Ausgestaltung der Erfindung sieht vor, dass der Rollbalg an seinem, dem ersten Anschlussteil zugewandten Ende einen Befestigungswulst mit einem Wulstkern aufweist, wobei der Wulstkern aus Kunststoff besteht.

Vorzugsweise bestehen das erste Anschlussteil und der Wulstkern aus einem Kunststoff mit gleichem oder ähnlichem Längenausdehnungskoeffizienten bestehen. Die Materialien für die Anschlussteile und für die Befestigungsmittel, insbesondere für die Wulstkerne, können optimal aufeinander abgestimmt werden.

Zweckmäßigerweise ist vorgehen, dass für die Verbindung zwischen Rollbalg und zweitem Anschlussteil und/oder dass für die Verbindung zwischen Rollbalg und erstem Anschlussteil jeweils eine konusförmige Dichtfläche bzw. ein Konussitz am Anschlussteil vorgesehen ist.

Eine Weiterbildung der Erfindung sieht vor, dass der Wulstkern durch Spritzguss hergestellt ist.

Eine vorteilhafte Ausgestaltung der Erfindung sieht vor, dass der Wulstkern Ausnehmungen oder Bohrungen aufweist, die bei einer Vulkanisation mit dem Elastomer des Rollbalges ausfüllbar sind.

Eine Weiterbildung der Erfindung sieht vor, dass das die Querschnittsform des Befestigungsmittels oder des Wulstkerns derart wählbar ist, dass sie der dem Fachmann bekannten Anbindungsart des Rollbalgs am ersten und/oder zweiten Anschlussteil anpassbar ist. Vorzugsweise weist das Befestigungsmittel und/oder der Wulstkern einen runden, rechteckigen, ovalen, keilförmigen, halbovalen oder halbkreisförmigen Querschnitt aufweist.

Eine vorteilhafte Ausgestaltung der Erfindung sieht vor, dass das das Befestigungsmittel und/oder der Wulstkern auf seiner Außenfläche eine zusätzliche Profilierung in Form von Haltevorsprüngen oder Haltenasen aufweist.

Nachfolgend wird die Erfindung anhand zweier Ausführungsbeispiele erläutert, die in der der Zeichnung dargestellt sind. In dieser zeigen
Fig. 1 ein erstes und Fig. 2 ein zweites Ausführungsbeispiel, und zwar:
Fig. 1a eine Luftfeder im Längsschnitt und Fig. 2a einen Rollbalg im Längsschnitt,
Fig. 1b und Fig. 2b jeweils die Detailansicht X und
Fig. 1c und Fig. 2c jeweils die Detailansicht Y.

In den beiden Figuren der Zeichnung sind gleiche Teile stets mit den gleichen Bezugszeichen versehen.

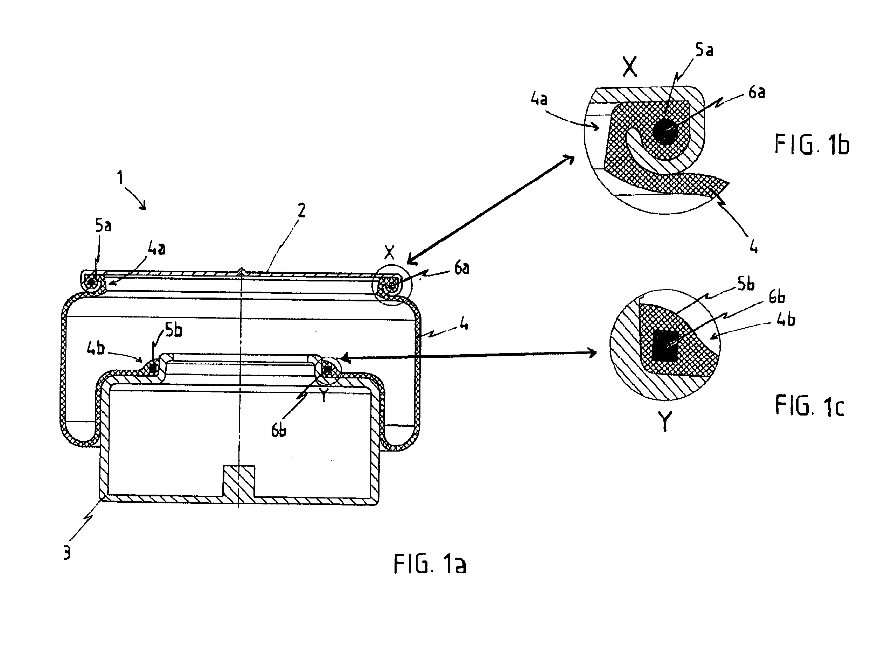

Fig. 1 zeigt eine Luftfeder 1 für Nutzfahrzeuge mit einem Deckel 2, einem Abrollkolben 3 und einem Rollbalg 4 aus elastomerem Werkstoff. Der Abrollkolben 3 besteht aus Kunststoff.

Der Rollbalg 4 weist an seinem, dem Abrollkolben 3 zugewandten Ende 4a einen Befestigungswulst 5b mit einem Wulstkern 6b auf. Der Wulstkern 6b besteht erfindungsgemäß aus Kunststoff.

Der Rollbalg 4 weist an seinem, dem Deckel 2 zugewandten Ende 4a einen weiteren Befestigungswulst 5a mit einem Wulstkern 6a auf, wobei auch dieser Wulstkern 6a erfindungsgemäß aus Kunststoff besteht.

Die Anbindung des Rollbalges 4 an den Deckel 2 und an den Abrollkolben 3 ist dem Fachmann bekannt. Der Deckel 2 weist eine Bördelung auf, die den Befestigungswulst 5a luftdicht umgreift. Der Abrollkolben weist dagegen einen Konussitz auf, an dem der der Befestigungswulst 5b luftdicht anliegt.

Der Wulstkern 6a, 6b ist durch Spritzguss hergestellt, wobei die Querschnittsform des Wulstkerns 6a, 6b derart gewählt ist, dass sie der Anbindungsart und damit der Luftdichtheit des Rollbalgs 4 am Deckel 2 bzw. am Abrollkolben 3 optimal anpassbar ist.

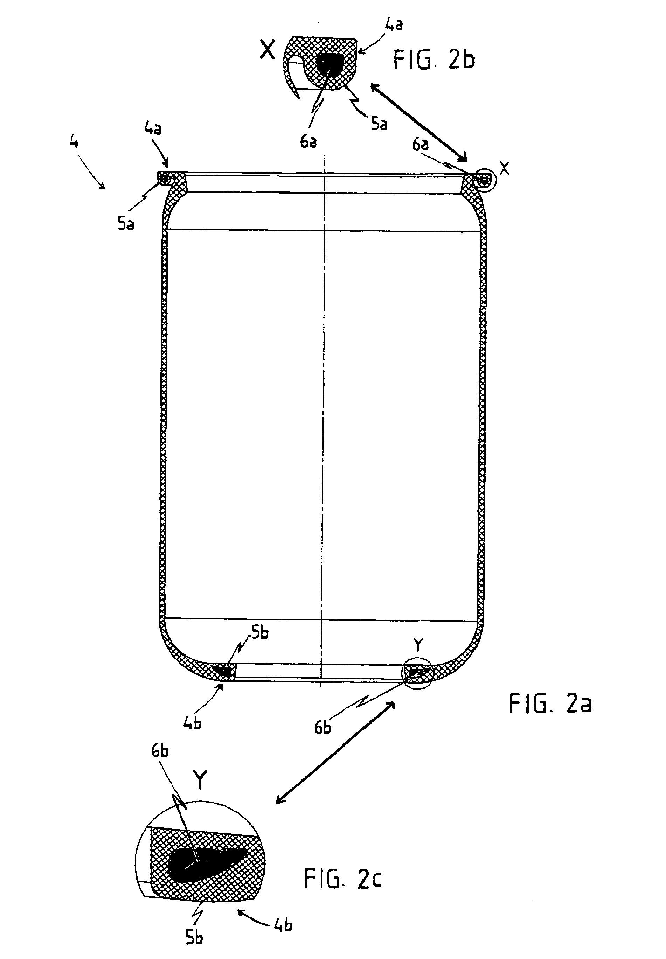

Fig. 2 zeigt einen Rollbalg 4 mit endseitigen Befestigungswülsten 5a und 5b, deren Wulstkerne 6a und 6b aus Kunststoff bestehen, welche einen optimierten Querschnitt aufweisen.

So ist in Fig. 2b gut zu erkennen, dass durch die gewählte, leicht ovale Querschnittsform des Wulstkernes 6a eine Optimierung erreicht wird, da die entsprechende Bördelung des Deckels 2 ebenfalls im Schnitt eher oval als rund ausgebildet ist. Auch die Querschnittform des Wulstkernes 6b in Fig. 2c ist angepasst. Es ist deutlich zu erkennen, dass sich die Schlinge des Befestigungswulstes 5b sehr viel besser um den Wulstkern 6b legen kann, als dies beispielsweise bei einem quadratischen Querschnitt der Fall wäre. So kann vorteilhaft auf sonst notwendige Profilstreifen verzichtet werden.

### Bezugszeichenliste

### (ist Bestandteil der Beschreibung)

- 1: Luftfeder
- 2: erstes Anschlussteil (Deckel)
- 3: zweites Anschlussteil (Abrollkolben)
- 4: Rollbalg
- 4a: erstes Ende des Rollbalges
- 4b: zweites Ende des Rollbalges
- 5a: erstes Befestigungsmittel (Befestigungswulst)
- 5b: zweites Befestigungsmittel (Befestigungswulst)
- 6a: Wulstkern
- 6b: Wulstkern

## Patentansprüche

1. Luftfeder (1) für Nutzfahrzeuge mit einem ersten Anschlussteil (2), insbesondere in Form eines Deckels, einem zweiten Anschlussteil (3) in Form eines Abrollkolbens und einem Rollbalg (4) aus elastomerem Werkstoff, wobei ein erstes Ende des Rollbalges (4a) mittels eines ersten Befestigungsmittels (5a) an dem ersten Anschlussteil (2) und ein zweites Ende des Rollbalges (4b) mittels eines zweiten Befestigungsmittels (5b) an dem Abrollkolbcn (3) dichtend befestigbar ist, wobei das zweite Befestigungsmittel (5b) keinen verschraubbaren Spannteller zur Fixierung des Rollbalges (4b) auf dem Abrollkolben (3) aufweist, **dadurch gekennzeichnet, dass** der Abrollkolben (3) aus Kunststoff besteht und das zweite Befestigungsmittel (5b) nicht aus Metall ausgebildet ist und/oder dass das erste Anschlussteil (2) aus Kunststoff besteht und das erste Befestigungsmittel (5a) nicht aus Metall ausgebildet ist und der Rollbalg (4),
• an seinem ersten, dem ersten Anschlussteil (2) zugewandten Ende (4a) einen Befestigungswulst (5a) mit einem Wulstkern (6a) aufweist, wobei der Wulstkern (6a) aus Kunststoff besteht und der Kunstoff einen gleichem oder ähnlichen Längenausdehnungskoeffizient aufweist wie der Kunststoff des ersten Anschlussteils (2), und/oder
• an seinem zweiten, dem Abrollkolben (3) zugewandten Ende (4b) einen Befestigungswulst (5b) mit einem Wulstkern (6b) aufweist, wobei der Wulstkern (6b) aus Kunststoff besteht und der Kunststoff einen gleichem oder ähnlichen Längenausdehnungskoeffizient aufweist wie der Kunststoff des Abrollkolbens (3).

2. Luftfeder (1) nach Anspruch 1, **dadurch gekennzeichnet, dass** für die Verbindung zwischen Rollbalg (4) und zweitem Anschlussteil (3) und/oder dass für die Verbindung zwischen Rollbalg (4) und erstem Anschlussteil (2) jeweils ein Konussitz am Anschlussteil (3, 2) vorgesehen ist.

3. Luftfeder (1) nach Anspruch 1 oder 2, **dadurch gekennzeichnet, dass** der Wulstkern (6a, 6b) durch Spritzguss hergestellt ist.

4. Luftfeder (1) nach einem der Ansprüche 1 bis 3, **dadurch gekennzeichnet, dass** der Wulstkern (6a, 6b) Ausnehmungen oder Bohrungen aufweist, die bei einer Vulkanisation mit dem Elastomer des Rollbalges (4) ausfüllbar sind.

5. Luftfeder (1) nach einem der Ansprüche 1 bis 4, **dadurch gekennzeichnet, dass** das die Querschnittsform des Befestigungsmittels (5a, 5b) oder des Wulstkerns (6a, 6b) derart wählbar ist, dass sie der dem Fachmann bekannten Anbindungsart des Rollbalgs (4) am ersten und/oder zweiten Anschlussteil (2, 3) anpassbar ist.

6. Luftfeder (1) nach Anspruch 5, **dadurch gekennzeichnet, dass** das Befestigungs-mittel (5a, 5b) und/oder der Wulstkern (6a, 6b) einen runden, rechteckigen, ovalen, keilförmigen, halbovalen oder halbkreisförmigen Querschnitt aufweist.

7. Luftfeder (1) nach einem der Ansprüche 1 bis 6, **dadurch gekennzeichnet, dass** das das Befestigungsmittel (5a, 5b) und/oder der Wulstkern (6a, 6b) auf seiner Außenfläche eine zusätzliche Profilierung in Form von Haltevorsprüngen oder Haltenasen aufweist.

## Claims

1. Air spring (1) for commercial vehicles, comprising a first connection part (2), in particular in the form of a cover, a second connection part (3) in the form of a roll-off piston and a rolling bellows (4) made of elastomeric material, wherein a first end of the rolling bellows (4a) can be fastened sealingly to the first connection part (2) by means of a first fastening means (5a) and a second end of the rolling bellows (4b) can be fastened sealingly to the roll-off piston (3) by means of a second fastening means (5b), wherein the second fastening means (5b) does not have a screwable clamping plate for fixing the rolling bellows (4b) on the roll-off piston (3), **characterized in that** the roll-off piston (3) consists of plastic and the second fastening means (5b) is not formed from metal and/or **in that** the first connection part (2) consists of plastic and the first fastening means (5a) is not formed from metal, and the rolling bellows (4),
• at its first end (4a) which faces towards the first connection part (2), has a fastening bead (5a) having a bead core (6a), wherein the bead core (6a) consists of plastic and the plastic has an identical or similar coefficient of linear expansion to the plastic of the first connection part (2), and/or
• at its second end (4b) which faces towards the roll-off piston (3), has a fastening bead (5b) having a bead core (6b), wherein the bead core (6b) consists of plastic and the plastic has an identical or similar coefficient of linear expansion to the plastic of the roll-off piston (3).

2. Air spring (1) according to Claim 1, **characterized in that** a conical seat is provided in each case on the connection part (3, 2) for the connection between the rolling bellows (4) and the second connection part (3) and/or for the connection between the rolling bellows (4) and the first connection part (2).

3. Air spring (1) according to Claim 1 or 2, **characterized in that** the bead core (6a, 6b) is produced by injection molding.

4. Air spring (1) according to one of Claims 1 to 3, **characterized in that** the bead core (6a, 6b) has recesses or bores which can be filled with the elastomer of the rolling bellows (4) during vulcanization.

5. Air spring (1) according to one of Claims 1 to 4, **characterized in that** the cross-sectional shape of the fastening means (5a, 5b) or of the bead core (6a, 6b) can be selected in such a way that it can be adapted to the type of connection known to a person skilled in the art between the rolling bellows (4) and the first and/or second connection part (2, 3).

6. Air spring (1) according to Claim 5, **characterized in that** the fastening means (5a, 5b) and/or the bead core (6a, 6b) has a round, rectangular, oval, wedge-like, semi-oval or semicircular cross section.

7. Air spring (1) according to one of Claims 1 to 6, **characterized in that** the fastening means (5a, 5b) and/or the bead core (6a, 6b) is provided on its outer surface with an additional profiled section in the form of holding projections or holding tabs.

## Revendications

1. Ressort pneumatique (1) pour véhicules utilitaires comprenant une première partie de raccordement (2), en particulier sous la forme d'un couvercle, une deuxième partie de raccordement (3) sous la forme d'un piston déroulant et un soufflet roulant (4) en matériau élastomère, une première extrémité du soufflet roulant (4a) pouvant être fixée de manière hermétique au moyen d'un premier moyen de fixation (5a) à la première partie de raccordement (2) et une deuxième extrémité du soufflet roulant (4b) pouvant être fixée de manière hermétique au moyen d'un deuxième moyen de fixation (5b) au piston déroulant (3), le deuxième moyen de fixation (5b) ne présentant aucun plateau de serrage vissable pour la fixation du soufflet roulant (4b) sur le piston déroulant (3), **caractérisé en ce que** le piston déroulant (3) se compose de plastique et le deuxième moyen de fixation (5b) n'est pas réalisé en métal et/ou **en ce que** la première partie de raccordement (2) se compose de plastique et le premier moyen de fixation (5a) n'est pas réalisé en métal et le soufflet roulant (4),
- au niveau de sa première extrémité (4a) tournée vers la première partie de raccordement (2), présente un bourrelet de fixation (5a) avec une tringle (6a), la tringle (6a) se composant de plastique et le plastique présentant un coefficient de dilatation en longueur identique ou similaire à celui du plastique de la première partie de raccordement (2), et/ou
- au niveau de sa deuxième extrémité (4b) tournée vers le piston déroulant (3), présente un bourrelet de fixation (5b) avec une tringle (6b), la tringle (6b) se composant de plastique et le plastique présentant un coefficient de dilatation en longueur identique ou similaire à celui du plastique du piston déroulant (3).

2. Ressort pneumatique (1) selon la revendication 1, **caractérisé en ce que** pour la connexion entre le soufflet roulant (4) et la deuxième partie de raccordement (3) et/ou **en ce que** pour la connexion entre le soufflet roulant (4) et la première partie de raccordement (2) est à chaque fois prévu un siège conique au niveau de la partie de raccordement (3, 2).

3. Ressort pneumatique (1) selon la revendication 1 ou 2, **caractérisé en ce que** la tringle (6a, 6b) est fabriquée par moulage par injection.

4. Ressort pneumatique (1) selon l'une quelconque des revendications 1 à 3, **caractérisé en ce que** la tringle (6a, 6b) présente des évidements ou des alésages qui peuvent être remplis lors d'une vulcanisation avec l'élastomère du soufflet roulant (4).

5. Ressort pneumatique (1) selon l'une quelconque des revendications 1 à 4, **caractérisé en ce que** la forme en section transversale du moyen de fixation (5a, 5b) ou de la tringle (6a, 6b) peut être sélectionnée de telle sorte qu'elle puisse être adaptée au type de liaison connu de l'homme de l'art du soufflet roulant (4) à la première et/ou la deuxième partie de raccordement (2, 3).

6. Ressort pneumatique (1) selon la revendication 5, **caractérisé en ce que** le moyen de fixation (5a, 5b) et/ou la tringle (6a, 6b) présente (nt) une section transversale ronde, rectangulaire, ovale, en forme de coin, semi-ovale ou semi-circulaire.

7. Ressort pneumatique (1) selon l'une quelconque des revendications 1 à 6, **caractérisé en ce que** le moyen de fixation (5a, 5b) et/ou la tringle (6a, 6b) présente(nt), sur sa/leur surface extérieure, un profilage supplémentaire sous la forme de saillies de retenue ou d'ergots de retenue.
